# FASCICULE DE BREVET EUROPEEN

(11) **EP 0 447 281 B1**
(45) Date de publication et mention de la délivrance du brevet: **15.12.1993**
(21) Numéro de dépôt: 91400446.0
(22) Date de dépôt: 19.02.1991
(51) Int. Cl.: A21C 1/14

(54) **Dispositif d'extraction de pâte d'un pétrin à cuve cylindrique**
Vorrichtung zum Ausziehen von Pasta aus einem Kneter mit zylindrischem Behälter
Paste extraction device for a kneader with cylindrical receptacle

(30) Priorité: 14.03.1990 FR 9003250
(43) Date de publication de la demande: 18.09.1991
(73) Titulaire: DITO-SAMA, F-23200 Aubusson Creuse (FR)
(72) Inventeur: Musseau, Joel, F-23200 Aubusson (FR); Paturel, Bruno, F-23200 Aubusson (FR); Rochez, Claude, F-23200 Aubusson (FR)
(74) Mandataire: Polus, Camille

(56) Documents cités:
- EP-A- 0 300 871

## Description

La présente invention a pour objet un dispositif d'extraction de pâte notamment d'un pétrin à cuve cylindrique avec outil à axe de rotation vertical. On connaît déjà dans la demande de brevet français N° 87 09710 au nom de la demanderesse, un dispositif d'extraction de pâte pour pétrin notamment pour pétrin avec outil de pétrissage à axe oblique. Dans ce cas, le pétrin comprend un extracteur disposé latéralement de façon à coopérer avec la paroi de la cuve, la forme de l'extracteur assurant l'extraction de la pâte le long de l'extracteur du fond de la cuve jusqu'à l'extérieur de cette cuve par combinaison de la position statique de l'extracteur et du déplacement de la pâte entraînée par la cuve. Dans le cas des pétrins à outil de pétrissage à axe oblique, la quasi totalité de la cuve est accessible par l'utilisateur.

De façon à limiter l'accès à l'intérieur de cette cuve lors du fonctionnement, il est prévu un écran mobile, généralement une grille, qui vient se positionner immédiatement au dessus de la cuve de façon à ne laisser qu'un passage étroit pour l'extracteur lorsque celui-ci est en position de travail.

En effet, dans ce mode de réalisation, il est prévu que l'extracteur peut prendre deux positions tout ou rien, l'une totalement escamotée, en position d'équilibre sur l'arrière de la machine, et l'autre en position de travail, c'est-à-dire en coopération étroite avec la cuve. Pour le passage de la position d'équilibre arrière à la position de travail, il est nécessaire tout d'abord d'arrêter le pétrin, de relever l'écran, d'abaisser l'extracteur, et de remettre en place l'écran avant de remettre en marche le pétrin. Il y a donc une discontinuité dans l'opération et il est impossible d'abaisser l'extracteur avec l'écran en position de fermeture et même si l'utilisateur n'arrête pas le pétrin, le seul fait de soulever le couvercle déclenche des moyens de sécurité qui assurent immédiatement l'arrêt dudit pétrin.

La présente invention a pour objet un perfectionnement du dispositif d'extraction de la demande de brevet précitée applicable notamment dans le cas des pétrins à cuve cylindrique à l'axe de rotation vertical munis d'un outil de pétrissage à axe vertical du type spirale.

Un tel perfectionnement permet de faire participer l'extracteur lui-même en tant qu'écran à la protection et à la sécurité pour limiter l'accès à la cuve lors du fonctionnement du pétrin.

Dans ce but, selon l'invention, le dispositif d'extraction de la pâte d'un pétrin à cuve cylindrique et axe de rotation vertical muni d'un outil de pétrissage à axe vertical du type spirale, dont l'outil est monté excentré par rapport à l'axe de rotation de la cuve et qui est entraîné par des moyens moteurs partiellement disposés dans une tête venant au droit de l'outil, se caractérise en ce qu'il comprend un extracteur de pâte escamotable avec une position d'équilibre intermédiaire entre une position de travail et une position de retrait ainsi qu'un écran mobile de forme complémentaire de celle de l'extracteur de façon à interdire l'accès de la cuve lorsque l'extracteur est en position d'équilibre intermédiaire ou en position de travail.

Selon une caractéristique particulière, l'extracteur est latéral et articulé par rapport à la tête du pétrin autour d'un axe horizontal.

Selon une autre caractéristique, l'extracteur du dispositif comprend une partie courbe formant canal qui coopère étroitement avec le bord et le fond de la cuve et un bras reliant cette partie courbe à l'axe de rotation. Plus particulièrement, l'extracteur comprend au moins un écran de protection qui coopère avec l'écran mobile pour interdire l'accès à l'intérieur de la cuve lorsque l'extracteur est en position abaissée.

Suivant d'autres caractéristiques, l'extracteur comprend une poignée de manoeuvre accessible quelle que soit la position de l'extracteur. L'extracteur comprend en outre des moyens compensateurs d'efforts avec un point d'équilibre correspondant à la position intermédiaire.

Il est également prévu que le dispositif comprend des moyens électriques de sécurité qui arrêtent les moyens moteurs lorsque l'extracteur et/ou l'écran sont en position relevée au dessus de la position intermédiaire.

L'invention est décrite ci-après selon un mode particulier de réalisation en regard des figures annexées qui représentent :
- la figure 1, une vue en perspective d'un pétrin à cuve mobile avec un outil à axe de rotation vertical selon l'invention, l'outil et l'écran étant en position de travail,
- la figure 2 représente une vue partielle en perspective du pétrin de la figure 1 avec l'extracteur en position de travail et l'écran relevé,
- la figure 3 représente une vue en perspective semblable à celle de la figure 1 avec l'extracteur en position intermédiaire, et
- la figure 4 représente une vue de côté en perspective du pétrin représenté à la figure 3.

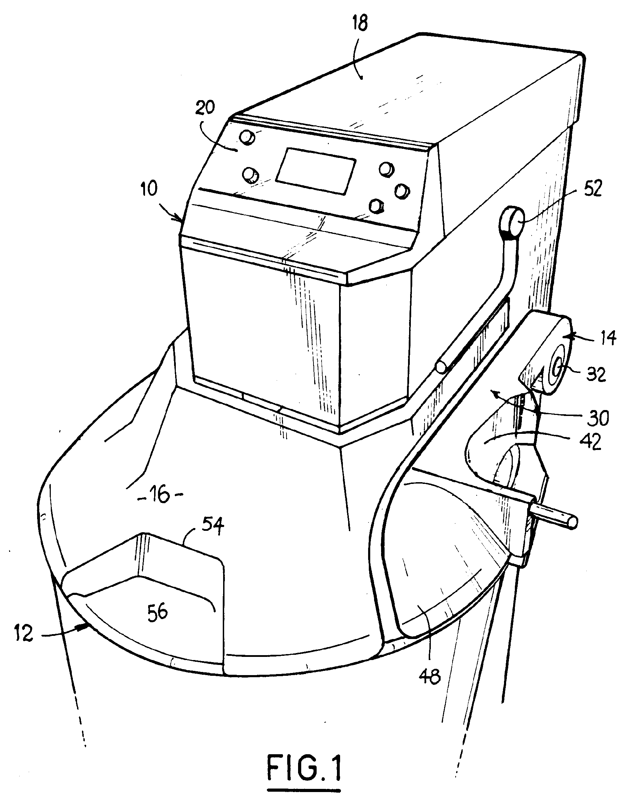

Sur la figure 1 on a représenté un pétrin 10 avec une cuve mobile 12, un extracteur 14 et un écran mobile de protection 16.

Pour la suite de la description, on entend par "position de travail" de l'extracteur la position dans laquelle il extrait la pâte, c'est-à-dire le position totalement abaissée et par "position intermédiaire" la position dans laquelle l'extracteur coopère avec l'écran pour assurer la sécurité, l'extracteur ne touchant pas la pâte.

Le pétrin comprend une tête 18 à l'intérieur de laquelle est disposée une partie des moyens moteurs de façon connue et non représentée en détail, tandis que sur l'avant un tableau de commande 20 accessible à l'utilisateur permet de piloter le pétrin.

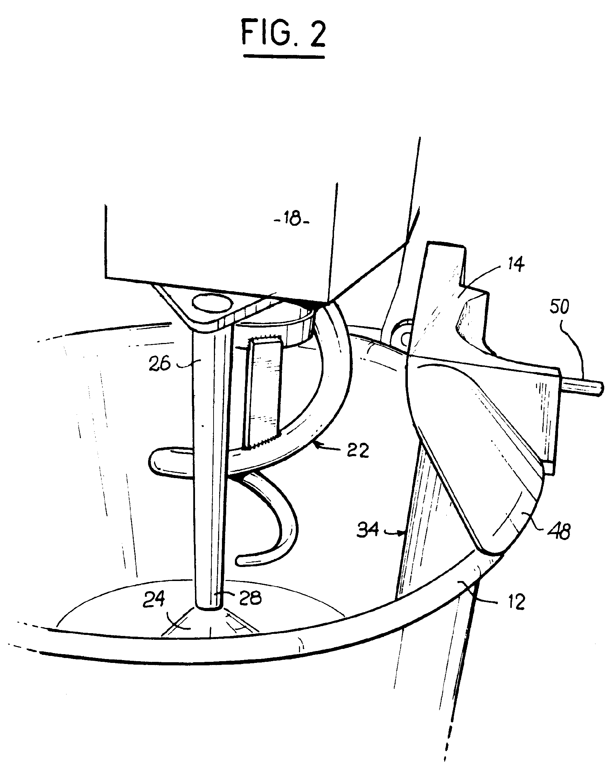

Ainsi que cela est représenté plus en détail sur la figure 2, la tête 18 comprend un outil 22 monté rotatif par rapport à cette tête 18 et entraîné par les moyens moteurs précités. Cet outil 22 est du type spirale et il assure lors de sa rotation le pétrissage des matières introduites dans la cuve 12. Cet outil 22 est monté excentré par rapport au centre de la cuve 12 représenté sur la figure 2 par un cône en saillie 24 centré par rapport à l'axe de rotation de la cuve 12.

Par ailleurs, sur la tête 18, une barre centrale 26 sensiblement cylindrique est fixée et montée à proximité de l'axe de rotation de la cuve, l'extrémité inférieure 28 de cette barre formant butée venant à proximité immédiate du cône 24.

La cuve 12 est du type cylindrique à bords verticaux, généralement réalisée en tôle d'acier inoxydable. Cette cuve est entraînée à sa partie inférieure, de façon connue, par les moyens moteurs du pétrin afin que le contenu de la cuve soit soumis à un double mouvement de rotation de la cuve et de rotation de l'outil 22.

L'extracteur 14 comprend un bras 30 monté rotatif autour d'un axe 32 horizontal et perpendiculaire à la face latérale de la tête 18.

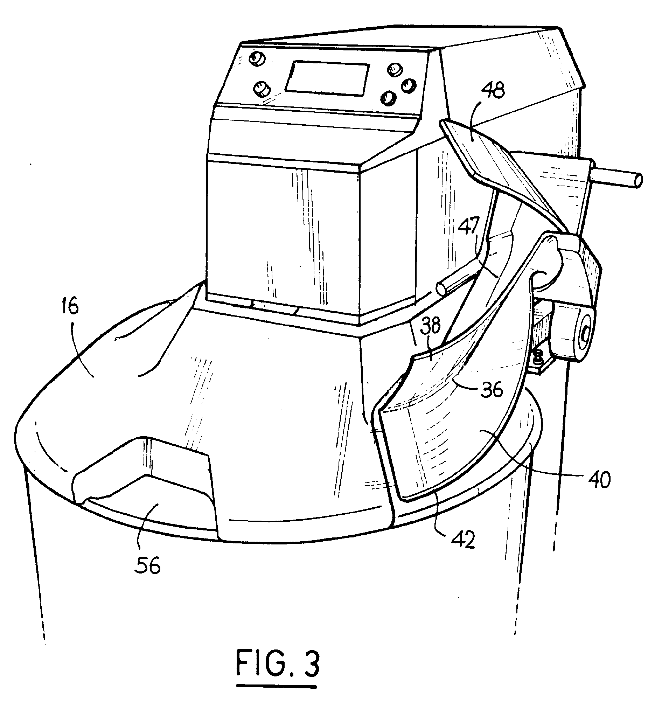

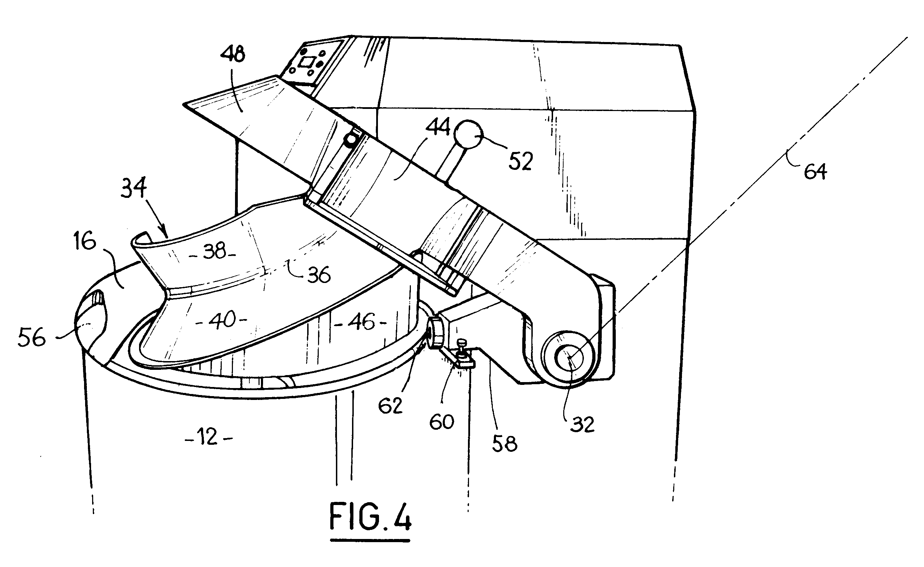

A l'extrémité du bras 14, sensiblement au droit de la butée 26, l'extracteur comprend un ensemble de profils 34 qui, ainsi que cela est mieux représenté sur les figures 3 et 4, comprend un canal d'extraction 36 formée par deux ailes 38 et 40, l'aile 40 venant coopérer par frottement avec la paroi intérieure de la cuve grâce à un joint 42. La pâte est évacuée en partie supérieure à travers une fenêtre 44 vers l'extérieur de la cuve.

L'ensemble de profils 34 comprend également un premier écran 46 disposé de façon sensiblement parallèle à la face latérale de la tête 18 du pétrin de façon que l'espace libre entre l'extracteur, le bras 30 et la cuve 12 soit masqué lorsque l'extracteur est dans la position intermédiaire représentée à la figure 4 et un deuxième écran 47 disposé vers l'intérieur et vers le haut de façon que l'espace libre entre l'extracteur et la tête du pétrin soit masqué (figure 3).

Par ailleurs, l'ensemble de profils 34 est complété par un troisième écran 48 disposé dans le prolongement du bras 30 de façon à obturer l'espace entre l'extracteur et l'écran mobile de protection 16 lorsque l'extracteur est en position de travail ainsi que cela est représenté sur la figure 1.

Une poignée de préhension 50 est fixée à l'extracteur, cette poignée restant accessible à l'utilisateur quelle que soit la position de l'extracteur.

L'écran 16 est articulé autour de deux axes 52 disposés de part et d'autre de la tête 18 de façon que l'écran puisse être escamoté par rotation autour de l'axe 52 au dessus de la tête 18.

Dans sa position de travail, l'écran 16, ainsi que cela est représenté sur les figures 1, 3 et 4 est disposé immédiatement au dessus de la cuve de façon à interdire l'accès à l'outil 22.

Cet écran 16 comprend également un décrochement 54, diamétralement opposé à l'outil par rapport à la butée 26 de façon à libérer un passage 56 qui permet un accès partiel à la cuve par lequel l'utilisateur peut prélever éventuellement une certaine quantité de pâte ou ajouter des ingrédients.

L'écran mobile de protection représenté sous la forme d'une paroi pleine, peut être réalisé sous forme de grille de façon à permettre à l'utilisateur de surveiller le travail de la pâte.

L'extracteur est complété par un ensemble de butées 58, ainsi que cela est représenté sur la figure 4, l'une d'elles 60 permettant un réglage fin de la position verticale du bras 30 et de l'extracteur associé par rapport à la cuve, tandis que l'autre 62, du type galet assure la reprise des efforts subis par le bras lors de l'extraction de la pâte, qui ont tendance à écarter ce bras de la cuve.

L'arbre 32 est relié à des moyens compensateurs d'efforts avec point d'équilibre, internes au bâti et non représentés car bien connus de l'homme du métier. De tels moyens compensateurs d'efforts comprennent généralement une patte solidaire de l'arbre 32 et perpendiculaire à celui-ci, l'extrémité de la patte étant reliée à un vérin compensateur d'efforts de type connu.

L'extracteur peut prendre une position intermédiaire telle que représentée sur les figures 3 et 4.

L'extracteur peut prendre une position de retrait stable lorsque le bras 30 est parallèle à la ligne en trait mixte 64 ainsi que cela est schématiquement indiqué sur la figure 4, notamment utilisée durant le nettoyage et la maintenance.

La troisième position d'équilibre que peut prendre l'extracteur est la position représentée sur les figures 1 et 2, c'est-à-dire la position de travail.

De plus, le pétrin représenté sur les figures 1 à 4 comprend des moyens électriques de sécurité qui arrêtent les moyens moteurs lorsque l'extracteur 14 et/ou l'écran mobile de protection 16 sont en position relevée. De tels moyens électriques font appel dans ce mode de réalisation à des interrupteurs commandés par des cames solidaires de l'arbre de rotation 32.

Le fonctionnement du pétrin selon l'invention est décrit ci-après.

Le pétrin étant à l'arrêt l'utilisateur verse dans la cuve 12 les ingrédients nécessaires à la fabrication de la pâte. Il abaisse ensuite l'écran mobile de protection 16 de façon que ce dernier vienne en position de travail au dessus de la cuve 12 en ne laissant subsister que le passage 56.

L'extracteur 14 est également basculé de la position de retrait dans laquelle le bras 30 est parallèle à la ligne en trait mixte 64 jusque dans la position intermédiaire représentée sur les figures 3 et 4. L'ordre de mise en place de l'écran et de l'extracteur peut être interverti sans aucun inconvénient.

Le pétrin est mis en marche grâce au tableau de commande 20 ce qui provoque la mise en rotation simultanée de la cuve 12 et de l'outil 22 en spirale assurant ainsi un pétrissage. La pâte formée est répartie sensiblement selon un cercle grâce à la barre centrale 26. La pâte est ainsi travaillée jusqu'à ce qu'elle ait la consistance désirée, l'extracteur interdisant grâce aux premier et deuxième écrans 46, 47 et grâce à l'écran mobile de protection 16 ainsi qu'à l'extracteur lui-même l'accès à l'outil 22 par l'utilisateur. Si l'utilisateur relève l'extracteur 14 et/ou l'écran 16, ce mouvement provoque immédiatement l'arrêt du pétrin. Lorsque la pâte doit être évacuée de la cuve, l'utilisateur exerce une pression de haut en bas sur la poignée 50 pour vaincre la position d'équilibre, abaisser l'extracteur et le faire pénétrer dans la pâte. L'utilisateur exerce son effort jusqu'à ce que l'extracteur entre au contact avec la pâte. Celle-ci exerce un effort sur l'extracteur qui positionne automatiquement l'extracteur en appui sur la butée 60. Dans cette position de travail, l'accès à l'intérieur de la cuve, du côté de l'extracteur, est interdit par le bras 30 et par le troisième écran 48.

Ce type d'extracteur à position intermédiaire et à écrans de protection complémentaires solidaires de l'extracteur est applicable à tous les pétrins et augmente la souplesse d'utilisation puisque l'extracteur peut être manoeuvré sans interruption du fonctionnement du pétrin de la position intermédiaire à la position de travail et vice et versa lorsque l'utilisateur effectue une évacuation partielle de la pâte.

L'écran mobile 16 est articulé autour d'un axe horizontal mais en variante il peut être articulé autour d'un axe vertical ou monté en translation verticale par rapport à la tête.

Selon une variante de l'invention, les positionnements de l'extracteur peuvent s'effectuer de façon automatique grâce à un vérin hydraulique par exemple, qui peut prendre une position fixe intermédiaire entre deux positions extrêmes, qui correspond à la position intermédiaire dans laquelle l'extracteur coopère avec l'écran mobile de protection 16 grâce aux premier et deuxième écrans 46 et 47.

De même le pétrin, et plus exactement l'outil, peut également être ralenti oui arrêté durant la phase d'extraction de façon à ne pas modifier la qualité de pétrissage entre le début et la fin de cette phase d'extraction.

Dans ce cas, le passage de l'extracteur de la position intermédiaire à la position de travail provoque automatiquement le ralentissement de l'outil.

## Revendications

1. Dispositif d'extraction de la pâte d'un pétrin (10) notamment à cuve (12) cylindrique à axe de rotation vertical, muni d'un outil de pétrissage (22) à axe vertical du type spirale, monté excentré par rapport à l'axe de rotation de la cuve et entraîné par des moyens moteurs partiellement disposés dans une tête (18) venant au droit de l'outil, caractérisé en ce qu'il comprend un extracteur (14) de pâte escamotable avec une position d'équilibre intermédiaire entre une position de travail et une position de retrait, et un écran mobile (16) de forme complémentaire de celle de l'extracteur de façon à interdire l'accès de la cuve lorsque l'extracteur est en position d'équilibre intermédiaire ou en position de travail.

2. Dispositif selon la revendication 1 caractérisé en ce que l'extracteur (14) est latéral et articulé par rapport à la tête (18) du pétrin autour d'un axe horizontal (32).

3. Dispositif selon la revendication 1 ou 2 caractérisé en ce que l'extracteur comprend deux ailes (38 et 40) formant un canal (36), l'aile (40) coopérant étroitement avec le bord et le fond de la cuve en position de travail, et un bras (30) reliant notamment ces deux ailes à l'axe d'articulation horizontal (32) de l'extracteur.

4. Dispositif selon l'une quelconque des revendications précédentes, caractérisé en ce que l'extracteur (14) comprend au moins un écran (46, 47, 48) de protection solidaire de l'extracteur qui coopère avec l'écran mobile (16) de façon à interdire l'accès à l'intérieur de la cuve lorsque l'extracteur est en position de travail ou d'équilibre intermédiaire.

5. Dispositif selon l'une quelconque des revendications précédentes, caractérisé en ce que l'extracteur (14) comprend une poignée de manoeuvre (50) accessible quelle que soit la position de l'extracteur.

6. Dispositif selon l'une quelconque des revendications précédentes, caractérisé en ce que l'extracteur comprend des moyens compensateurs d'efforts avec point d'équilibre en position intermédiaire.

7. Dispositif selon l'une quelconque des revendications précédentes, caractérisé en ce que la tête (18) du pétrin comprend une butée (60) pour le bras (30) de l'extracteur (14) lorsque celui-ci est en position de travail et une butée de reprise des efforts (62) par exemple du type galet pour reprendre les efforts subis par l'extracteur.

8. Dispositif selon la revendication 7 caractérisé en ce que l'écran mobile est articulé autour d'un axe vertical ou d'un axe horizontal ou bien l'écran mobile est monté en translation verticale par rapport à la tête.

9. Dispositif selon l'une quelconque des revendications précédentes, caractérisé en ce qu'il comprend des moyens électriques de sécurité qui arrêtent les moyens moteurs lorsque l'extracteur et/ou l'écran sont en position relevée.

10. Dispositif selon l'une quelconque des revendications précédentes, caractérisé en ce qu'il comprend des moyens automatiques pour placer l'extracteur dans l'une des trois positions de retrait, intermédiaire, de travail.

11. Dispositif selon l'une quelconque des revendications précédentes, caractérisé en ce qu'il comprend des moyens de commande qui ralentissent automatiquement la vitesse de l'outil (22) ou l'arrête lorsque l'extracteur passe de la position intermédiaire à la position de travail.

## Patentansprüche

1. Vorrichtung zum Ausziehen von Pasta aus einem Kneter (10) insbesondere mit zylindrischen Behälter (12) und vertikaler Drehachse, der mit einem Knetwerkzeug (22) mit vertikaler, spiralartiger Achse ausgestattet ist, und dessen Werkzeug dezentriert bezüglich der Drehachse des Behälters angebracht ist und von Motormitteln angetrieben wird, die teilweise in einem Kopf (18) senkrecht zum Werkzeug angeordnet sind, dadurch gekennzeichnet, daß sie einen einziehbaren Auszieher (14) von Pasta mit einer Zwischengleichgewichtsstellung zwischen einer Arbeitsstellung und einer zurückgezogenen Stellung aufweist, sowie eine bewegliche Abschirmung (16) in ergänzender Form zu der des Ausziehers, derart, daß sie den Zugang zum Behälter verhindert, wenn der Auszieher in Zwischengleichgewichtsstellung oder in Arbeitstellung ist.

2. Vorrichtung gemäß Anspruch 1, dadurch gekennzeichnet, daß der Auszieher (14) seitlich und bezüglich des Kopfes (18) des Kneters gelenkig um eine horizontale Achse (32) angebracht ist.

3. Vorrichtung gemäß Anspruch 1 oder 2, dadurch gekennzeichnet, daß der Auszieher zwei Flügel (38 und 40) aufweist, die einen Kanal (36) bilden, wobei der Flügel (40) eng mit der Kante und dem Boden des Behälters in Arbeitsstellung zusammenarbeitet, und ein Arm (30) insbesondere diese beiden Flügel mit der horizontalen Gelenkachse (32) des Ausziehers verbindet.

4. Vorrichtung gemäß irgendeinem der vorherigen Ansprüche, dadurch gekennzeichnet, daß der Auszieher (14) zumindest eine Schutzabschirmung (46, 47, 48) aufweist, die einstückig mit dem Auszieher ist, der mit der beweglichen Abschirmung (16) derart zusammenarbeitet, daß der Zugang zum Inneren des Behälters verhindert wird, wenn der Auszieher in Arbeitsstellung oder Zwischengleichgewichtsstellung ist.

5. Vorrichtung gemäß irgendeinem der vorherigen Ansprüche, dadurch gekennzeichnet, daß der Auszieher (14) einen Bedienungshebel (50) aufweist, der unabhängig von der Stellung des Ausziehers zugänglich ist.

6. Vorrichtung gemäß irgendeinem der vorherigen Ansprüche, dadurch gekennzeichnet, daß der Auszieher Beanspruchungsausgleichmittel mit Gleichgewichtspunkt in der Zwischenstellung aufweist.

7. Vorrichtung gemäß irgendeinem der vorherigen Ansprüche, dadurch gekennzeichnet, daß der Kopf (18) des Kneters einen Anschlag (60) für den Arm (30) des Ausziehers (14) aufweist, wenn dieser in Arbeitsstellung ist, und einen Anschlag (62) zur Wiederaufnahme der Beanspruchung, z.B. in der Art einer Walze, um die von dem Auszieher erlittenen Beanspruchungen wiederaufzunehmen.

8. Vorrichtung gemäß Anspruch 7, dadurch gekennzeichnet, daß die bewegliche Abschirmung gelenkig um eine vertikale Achse oder um eine horizontale Achse angebracht ist, oder daß die bewegliche Abschirmung in vertikaler Translation bezüglich des Kopfes angebracht ist.

9. Vorrichtung gemäß irgendeinem der vorherigen Ansprüche, dadurch gekennzeichnet, daß sie elektrische Sicherheitsmittel aufweist, die die Motormittel anhalten, wenn der Auszieher und/oder die Abschirmung in erhobener Stellung sind.

10. Vorrichtung gemäß irgendeinem der vorherigen Ansprüche, dadurch gekennzeichnet, daß sie automatische Mittel aufweist, um den Auszieher in eine der drei Stellungen, nämlich Rückzugsstellung, Zwischenstellung und Arbeitsstellung zu bringen.

11. Vorrichtung gemäß irgendeinem der vorherigen Ansprüche, dadurch gekennzeichnet, daß sie Steuermittel aufweist, die automatisch die Geschwindigkeit des Werkzeuges (22) verlangsamen oder es anhalten, wenn der Auszieher von der Zwischenstellung in die Arbeitsstellung übergeht.

## Claims

1. Device for extracting paste from a kneading machine (10), more particularly having a cylindrical tank (12) with a vertical rotation axis, equipped with a spiral, vertically axed kneading tool (22), mounted in offset manner with respect to the tank rotation axis and driven by motor means partly placed in a head (18) to the right of the tool, characterized in that it comprises a retractable paste extractor (14) having an intermediate equilibrium position between a working position and a withdrawn position, and a mobile shield (6), whose shape is complimentary to that of the extractor so as to prevent access to the tank when the extractor is in the intermediate equilibrium position or in the working position.

2. Device according to claim 1, characterized in that the extractor (14) is lateral and articulated with respect to the kneading machine head (18) about a horizontal shaft (32).

3. Device according to claim 1 or 2, characterized in that the extractor comprises two wings (38, 40) forming a channel (36), the wing (40) closely cooperating with the edge and bottom of the tank in the working position, and an arm (30) more particularly connecting these two wings to the horizontal articulation shaft (32) of the extractor.

4. Device according to any one of the preceding claims, characterized in that the extractor (14) comprises at least one protective shield (46, 47, 48) integral with the extractor, which cooperates with the mobile shield (16) so as to prevent access to the interior of the tank when the extractor is in the working position or intermediate equilibrium position.

5. Device according to any one of the preceding claims, characterized in that the extractor (14) comprises an operating handle (50) accessible in any random extractor position.

6. Device according to any one of the preceding claims, characterized in that the extractor comprises force compensating means with the equilibrium point in the intermediate position.

7. Device according to any one of the preceding claims, characterized in that the kneading machine head (18) comprises an abutment (60) for the arm (30) of the extractor (14) when the latter is in the working position and a force absorption abutment (62), e.g. of the roller type, for absorbing the forces to which the extractor is exposed.

8. Device according to claim 7, characterized in that the mobile shield is articulated about a vertical axis or a horizontal axis or the mobile shield is fitted in vertical translation with respect to the head.

9. Device according to any one of the preceding claims, characterized in that it comprises electrical safety means, which stop the motor means when the extractor and/or the shield are in the raised position.

10. Device according to any one of the preceding claims, characterized in that it comprises automatic means for placing the extractor in one of the three withdrawn, intermediate or working positions.

11. Device according to any one of the preceding claims, characterized in that it comprises control means, which automatically slow down the speed of the tool (22) or stops it when the extractor passes from the intermediate position to the working position.
